(19) Europäisches Patentamt
European Patent Office
Office européen des brevets

(11) Veröffentlichungsnummer : **0 170 101**
**B1**

(12) # EUROPÄISCHE PATENTSCHRIFT

(45) Veröffentlichungstag der Patentschrift : **25.05.88**

(51) Int. Cl.⁴ : **C 07 F 9/53**

(21) Anmeldenummer : **85108328.7**

(22) Anmeldetag : **05.07.85**

(54) **Verfahren zur Herstellung tertiärer Phosphanoxide.**

(30) Priorität : **20.07.84 DE 3426721**

(43) Veröffentlichungstag der Anmeldung : **05.02.86 Patentblatt 86/06**

(45) Bekanntmachung des Hinweises auf die Patenterteilung : **25.05.88 Patentblatt 88/21**

(84) Benannte Vertragsstaaten : **BE CH DE FR GB IT LI NL**

(56) Entgegenhaltungen :
**EP-A- 0 084 798**
**THE JOURNAL OF ORGANIC CHEMISTRY, Band 34, Nr. 11, November 1969, Seiten 3349-3352; A.M. AGUIAR et al.: "Complex metal hydride reduction of t-alkynyl-1-phosphine sulfides"**
**Römpps Chemie-Lexikon, 8. Auflage, 1985, Seiten 3156-3157**

(73) Patentinhaber : **HOECHST AKTIENGESELLSCHAFT**
**Postfach 80 03 20**
**D-6230 Frankfurt am Main 80 (DE)**

(72) Erfinder : **Weiss, Erwin, Dr.**
**Vorderheide 1**
**D-6238 Hofheim am Taunus (DE)**

**EP 0 170 101 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf ein Verfahren zur Herstellung tertiärer Phosphanoxide durch Behandlung von tertiären Phosphansulfiden mit Wasserstoffperoxid mit einem Lösungsmittel.

Tertiäre Phosphanoxide sind Verbindungen der allgemeinen Formel.

$$R_3P = 0,$$

worin R = gleiche oder verschiedene organische Reste.

Sie sind End- und Zwischenprodukte auf verschiedenen Sachgebieten wie z. B. dem Pflanzenschutz- sowie dem Polymeren-Sektor.

Zu ihrer Herstellung ist eine Reihe verschiedener Methoden bekannt. Einige dieser Methoden gehen aus von tertiären Phosphansulfiden, welche durch eine oxidative Behandlung in die entsprechenden Phosphanoxide überführt werden. Diese Methoden bieten sich vor allem dann an, wenn die jeweiligen tertiären Phosphansulfide leicht zugänglich sind, so daß der Umweg über die Sulfide zu den Phosphanoxiden — verglichen mit anderen Methoden zur Herstellung der Phosphanoxide — der vorteilhaftere Weg ist.

Die oxidative Überführung der tertiären Phosphansulfide in die entsprechenden Phosphanoxide kann z. B. mittels $SOCl_2$, mittels $KMnO_4$ oder auch mittels $HNO_3$ erfolgen ; vgl. den Artikel von L. Maier « Organische Phosphorverbindungen » in Helvetica Chimica Acta 47, S. 120-132, insbesondere S. 124/125 (1964). In dieser Literaturstelle sind für die Oxidation mit den 3 genannten Reagentien folgende Reaktionsgleichungen angegeben :

$$(ClC_6H_4)_3PS + SOCl_2 \longrightarrow (ClC_6H_4)_3PO + S_2Cl_2$$

$$(CH_3C_6H_4)_3PS + KMnO_4 \xrightarrow{\text{Pyridin}} (HOOCC_6H_4)_3PO$$

$$(C_6H_5)_3PS + HNO_3 \text{ konz.} \longrightarrow (m{-}O_2NC_6H_4)_3PO$$

Für die Methode mit Thionylchlorid $SOCl_2$ ist die stark korrosive Wirkung dieses Reagenzes sowie die Bildung des stark geruchsbelästigenden Dischwefeldichlorids $S_2Cl_2$ bei dieser Reaktion nachteilig.

Die Oxidation mit $KMnO_4$ in Pyridin liefert durchweg nur mäßige Ausbeuten an Phosphanoxid und verläuft — wie aus der vorstehenden Reaktionsgleichung ersichtlich — im Falle des Einsatzes von Kernalkylierten aromatischen Phosphansulfiden unter Oxidation der am aromatischen Kern sitzenden Alkylgruppe zur Carboxylgruppe.

Bei der Umsetzung mit konzentrierter Salpetersäure findet außer der Phosphanoxid-Bildung gleichzeitig eine Nitrierung der vorhandenen aromatischen Kerne statt.

Eine günstigere Methode der Oxidation von tertiären Phosphansulfiden in die entsprechenden Phosphanoxide ist die von A.M. Aguiar et al. in J. Org. Chem. 34, S. 3349 bis 3352, insbesondere S. 3351 rechte Spalte, letzter Absatz (1969) offenbarte Wasserstoffperoxid-Methode. Die Methode wurde anhand der Oxidation des Dimethyl-1-butinylphosphansulfids mit einem etwa 75 %igen Überschuß an $H_2O_2$ in Methanol beschrieben :

$$(CH_3)_2\overset{\overset{S}{\|}}{P}-C\equiv C-C_2H_5 + H_2O_2 \xrightarrow{\text{in } CH_3OH} (CH_3)_2\overset{\overset{O}{\|}}{P}-C\equiv C-C_2H_5 + H_2O + S$$

Nach 2-tätigem Stehen des Ansatzes und entsprechender Aufarbeitung soll die Ausbeute an Dimethyl-1-butinyl-phosphanoxid 61 % betragen haben. Wegen der langen Reaktionszeit, der nur mäßigen Ausbeute sowie auch der Notwenigkeit der Aufarbeitung des im Überschuß eingesetzten Wasserstoffperoxids ist auch diese Methode nicht befriedigend.

Es bestand daher die Aufgabe, ein verbessertes Verfahren zur Überführung von tertiären Phosphansulfiden in die entsprechenden Phosphanoxide zu finden.

Diese Aufgabe konnte erfindungsgemäß durch den Einsatz von — gegebenenfalls halogenierten — aliphatischen $C_1$-$C_6$-Carbonsäuren und/oder von deren Anhydriden als Lösungsmittel oder zumindest als Lösungsmittel-Bestandteil bei der Oxidation von tertiären Phosphansulfiden mit $H_2O_2$ gelöst werden.

Erfindungsgegenstand ist daher ein Verfahren zur Herstellung tertiärer Phosphanoxide durch eine oxidative Behandlung von tertiären Phosphansulfiden mit $H_2O_2$ in einem Lösungsmittel ;

das Verfahren ist dadurch gekennzeichnet, daß man ein Lösungsmittel verwendet, welches zu mindestens etwa 20 Gew. - %, vorzugsweise zu mindestens 50 Gew. - %, ausgegebenenfalls halogenierten — aliphatischen $C_1$-$C_6$-Carbonsäuren und/oder deren Anhydriden und zum Rest aus damit mischbaren anderen inerten Lösungsmitteln besteht. Es ist besonders bevorzugt, als Lösungsmittel nur — gegebenenfalls halogenierte — aliphatische $C_1$-$C_6$-Carbonsäuren und/oder deren Anhydride, insbesondere nur

Essigsäure, zu verwenden.

Das Verfahren verläuft in kurzen Reaktionszeiten ohne die Bildung von störenden Nebenprodukte mit quantitativen oder nahezu quantitativen Ausbeuten an den jeweiligen Phosphanoxiden. Dies ist im Hinblick auf die lange Reaktionszeit und die nur mäßige Ausbeute bei der Oxidation mit $H_2O_2$ in Methanol (vgl. A.M. Aguiar et al., a. a. O.) sowie auch — wie eigene Versuche ergeben haben — des negativen Ergebnisses des Versetzens tertiärer Phosphansulfide mit $H_2O_2$ in anderen Lösungsmitteln (Acetonnitril, Aceton, etc.) außerordentlich überraschend.

Als gegebenenfalls halogensubstituierte aliphatische Carbonsäuren kommen vorzugsweise aliphatische $C_1$-$C_6$-Carbonsäuren in Frage, die noch durch ein oder mehrere Halogenatome, vorzugsweise F und/oder C1, substituiert sein können. Beispielhafte solche Carbonsäuren sind :

Ameisensäure
Essigsäure
Propionsäure
Monochloressigsäure
Monofluoressigsäure
Trifluoressigsäure etc.

Die Carbonsäuren sowie deren Anhydride können sowohl einzeln als auch in Mischung miteinander verwendet werden. Sie sollen mindestens etwa 20 Gew. - %, vozugsweise mindestens etwa 50 Gew. - % des Gesamtlösungsmittels ausmachen. Es ist besonders bevorzugt, wenn diese Carbonsäuren und/oder deren Anhydride alleiniges Lösungsmittel sind. Ganz besonders bevorzugt ist Essigsäure (Eisessig) das alleinige Lösungsmittel.

Falls die genannten Carbonsäuren und/oder deren Anhydride nicht als alleinige Lösungsmittel eingesetzt werden, müssen die Mischungskomponenten mit den Carbonsäuren und/oder deren Anhydriden mischbar sein ; außerdem dürfen sie natürlich mit dem Wasserstoffperoxid sowie den Ausgangs- und Endprodukten der Reaktion nicht in unerwünschter Weise reagieren. In Frage kommende derartige Mischungskomponenten sind daher z. B. Wasser, ($C_1$-$C_6$)-Alkohole wie z. B. Methanol oder Ethanol, niedere aliphatische halogenierte Kohlenwasserstoffe wie z. B. Methylenchlorid, 1,2-Dichlorethan etc., aromatische Kohlenwasserstoffe wie z. B. Toluol oder Xylol, aromatische Chlorkohlenwasserstoffe wie z. B. Chlorbenzol, Fluorbenzol etc.

Die Mischungskomponenten Wasser und Alkohole sind nur sinnvoll in Mischung mit den vorerwähnten Carbonsäuren, nicht mit deren Anhydriden, weil sich mit den Anhydriden die Säuren bzw. Ester bilden. Wenn die Säuren als Lösungsmittel beabsichtigt sind, werden sie vorteilhaft gleich als solche eingesetzt und nicht erst aus den Anhydriden und Wasser erzeugt.

Je weniger mischbar die zusätzlichen Lösungsmittelbestandteile mit den Carbonsäuren und/oder deren Anhydriden sind, desto niedriger kann natürlich auch nur ihr Anteil an der entsprechenden Lösungsmittelmischung sein.

Als tertiäre Phosphansulfide können für das Verfahren im Prinzip alle möglichen unter diese Bezeichnung fallenden Verbindungen eingesetzt werden. Bevorzugt ist der Einsatz von Phosphansulfiden der Formel

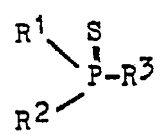

worin $R^1$, $R^2$ und $R^3$ = unabhängig voneinander gegebenenfalls durch inerte Gruppen substituierte $C_1$-$C_{12}$-Alkyl-$C_6$-$C_{10}$-Aryl- und $C_6$-$C_{20}$-Aralkylgruppen

Wenn die Alkyl-, Aryl, und Aralkyl-Gruppen durch inerte Gruppen substituierte sind, sind die Substituenten vorzugsweise Halogenatome, insbesondere nur F- und/oder Cl-Atome. Bevorzugte inerte Substituenten für die Aryl- und Aralkylgruppen sind auch Alkylreste (vorzugsweise mit bis zu 4 C-Atomen).

Beispielhafte tertiäre Phosphansulfide sind :

Triphenylphosphansulfid
Diphenyl-methyl-phosphansulfid
Dimethyl-phenyl-phosphansulfid
Tris-(4-fluorphenyl)-phosphansulfid
Bis-(4-fluorphenyl)-(2-fluorphenyl)-phosphansulfid
Bis-(4-fluorphenyl)-phenyl-phosphansulfid
(4-Fluorphenyl)-(2-fluorphenyl)-phenyl-phosphansulfid
Diphenyl-(4-fluorphenyl)-phosphansulfid
Diphenyl-(2-fluorphenyl)-phosphansulfid
Bis-(4-fluorphenyl)-methyl-phosphansulfid
(4-Fluorphenyl)-(2-fluorphenyl)-methyl-phosphansulfid

Dimethyl-(4-fluorphenyl)-phosphansulfid
Bis-(4-fluorphenyl)-(4-methylphenyl)-phosphansulfid
Bis-(4-fluorphenyl)-(2(methylphenyl)-phosphansulfid
(4-Fluorphenyl)-(2-fluorphenyl)-(4-methylphenyl)-phosphansulfid
Bis-(4-methylphenyl)-(4-fluorphenyl)-phosphansulfid
(4-Fluorphenyl)-(4-methylphenyl)-(2-methylphenyl)-phosphansulfid
Tris-(4-chlorphenyl)-phosphansulfid
Bis-(4-chlorphenyl)-(2-chlorphenyl)-phosphansulfid
Bis-(4-chlorphenyl)-phenyl-phosphansulfid
(4-Chlorphenyl)-(2-chlorphenyl)-phenyl-phosphansulfid
Diphenyl-(4-chlorphenyl)-phosphansulfid
Bis-(4-chlorphenyl)-methyl-phosphansulfid
(4-Chlorphenyl)-(2-chlorphenyl)-methyl-phosphansulfid
Dimethyl-(4-chlorphenyl)-phosphansulfid
(4-Chlorphenyl)-methyl-phenyl-phosphansulfid
(4-Fluorphenyl)-(4-chlorphenyl)-phenyl-phosphansulfid
(4-Fluorphenyl)-(4-chlorphenyl)-methyl-phosphansulfid
(4-Fluorphenyl)-methyl-phenyl-phosphansulfid
Tris-(4-methylphenyl)-phosphansulfid
Bis-(4-methylphenyl)-(2-methylphenyl)-phosphansulfid
Bis-(4-methylphenyl)-(3-methylphenyl)-phosphansulfid
Bis-(4-methylphenyl)-phenyl-phosphansulfid
(4-Methylphenyl)-(2-methylphenyl)-phenyl-phosphansulfid
(4-Methylphenyl)-(3-methylphenyl)-phenyl-phosphansulfid
Diphenyl-(4-methylphenyl)-phosphansulfid
Diphenyl-(3-methylphenyl)-phosphansulfid
Diphenyl-(2-methylphenyl)-phosphansulfid
Bis-(4-methylphenyl)-methyl-phosphansulfid
(4-Methylphenyl)-(2-methylphenyl)-methyl-phosphansulfid
(4-Methylphenyl)-(3-methylphenyl)-methyl-phosphansulfid
Dimethyl-(4-methylphenyl)-phosphansulfid
Dimethyl-(2-methylphenyl)-phosphansulfid
Dimethyl-(3-methylphenyl)-phosphansulfid

Wasserstoffperoxid kann als etwa 3 bis 85 %ige wässrige Lösung eingesetzt werden, zweckmäßig in der handelsüblichen Form (etwa 30 bis 35 %ig). Vorzugsweise wird das Wasserstoffperoxid in etwa äquimolarer Menge, bezogen auf das Ausgangs-Phosphansulfid, verwendet. Ein geringer Überschuß von bis zu etwa 5 % ist vorteilhaft ; weitere Überschüsse sind möglich, aber nicht mehr von Vorteil.

Die Phosphansulfide werden in dem Lösungsmittel gelöst oder suspendiert. Das Verhältnis von Phosphansulfid : Lösungsmittel kann in weiten Grenzen variieren. Vorteilhaft ist ein Gewichtsverhältnis von ca. 1 : (1-20). Zu der Lösung oder Suspension wird bei Temperaturen von im allgemeinen zwischen etwa —5 und +100 °C, vorzugsweise zwischen +40 und +80 °C, Wasserstoffperoxid als wässrige Lösung zudosiert. Da die Reaktion exotherm verläuft, ist gegebenenfalls Kühlung erforderlich. Entsprechend müssen kalte Lösungen oder Suspensionen von Phosphansulfiden nicht vorgeheizt werden, um die gewünschte Reaktionstemperatur zu erreichen ; es ist vielmehr möglich, die Reaktionswärme selbst zu nutzen, um die gewünschte Temperatur zu erzielen.

Die Aufarbeitung des Reaktionsgemisches erfolgt in an sich bekannter Weise durch Filtration der abgekühlten Lösung von dem normalerweise in elementarer Form anfallenden Schwefel.

Besonders günstig wirkt sich hier sehr geringe Löslichkeit des elementaren Schwefels in Carbonsäuren und/oder deren Anhydriden einerseits, sowie auch die gute Löslichkeit von tertiären Phosphanoxiden in Carbonsäuren und/oder deren Anhydriden, auch in Gegenwart des durch die Reaktionsführung unvermeidlichen Wasseranfalls aus.

Nach Abdestilieren des Lösemittels (vorzugsweise im Vakuum) bleiden die Phosphanoxide meist zunächst als ölige Carbonsäureaddukte zurück. Die freien Phosphanoxide können leicht in reiner Form durch Erhitzen im Vakuum oder Destillation erhalten werden. Ebenso ist es möglich, die Carbonsäureaddukte in Wasser aufzurühren und gegebenenfalls durch Neutralisation mit Basen zu spalten. Die freien Phosphanoxide fallen aus der wässrigen, gegebenenfalls alkalischen, Lösung aus und können abfiltriert oder — sofern flüssig — als zweite Phase abgetrennt werden.

Wegen der einfachen Durchführbarkeit der Reaktion, der kurzen Reaktionszeiten und der hohen Phosphanoxid-Ausbeuten stellt das Verfahren einen erheblichen Fortschritt auf diesem Gebiet dar. Ein weiterer erwähnenswerter Fortschritt besteht auch darin, daß kein $H_2O_2$-Überschuß eingesetzt werden muß (Gegensatz zu dem Verfahren von A.M. Aguiar et al., a. a. O.), was die Aufarbeitung erheblich erleichtert.

Die nachfolgenden Beispiele sollen der näheren Erläuterung der Erfindung dienen. Nach den (Erfindungs-) Beispielen folgen noch einige Vergleichsbeispiele, aus welchen hervorgeht, daß die

Oxidation von tertiären Phosphansulfiden mit $H_2O_2$ in anderen als den erfindungsgemäß einzusetzenden Lösungsmitteln nicht oder jedenfalls in einem in keiner Weise befriedigenden Ausmaß verlaüft.

A) (Erfindungs-)Beispiele

Beispiel 1

18,16 g (50 mMol) Bis-(4-chlorphenyl)-phenyl-phosphansulfid wurden in 50 ml Eisessig bei 50 °C gelöst und im Verlauf von 15 Minuten 1,79 g (52,5 mMol) Wasserstoffperoxid (4,51 ml eine 35 %igen wässrigen Lösung) zugetropft. Bereits nach wenigen Tropfen begann die Abscheidung von Schwefel. Durch Außenkühlung mit Eis wurde dafür gesorgt, daß die Innentemperatur 70 °C nicht überschreitet. Es wurde 30 Minuten bei 70 °C nachgerührt, auf Raumtemperatur abgekühlt, Schwefel abfiltriert und das Filtrat bei 100 °C/20 mbar eingedampft. Der Rückstand wurde in 50 ml Wasser suspendiert und mit 2n-NaOH bis zur alkalischen Reaktion versetzt.
Bis-(4-chlorphenyl)-phenyl-phosphanoxid wurde abfiltriert, mit Wasser nachgewaschen und im Vakuum bei 100 °C getrocknet.
Ausbeute : 16,9 g (97 % d. Th.), Fp. : 107 °C

Beispiel 2

13,41 g (50 mMol) Bis-(4-fluorphenyl)-methyl-phosphansulfid wurden in 50 ml Eisessig gelöst und 1,70 g (50 mMol) Wasserstoffperoxid (4,3 ml einer 35 %igen wässrigen Lösung) innerhalb 15 Minuten zugetropft. Durch Außenkühlung wurde die Reaktionstemperatur auf 60 °C begrenzt. Nach 30 Minuten bei 60 °C wurde auf 20 °C abgekühlt, filtriert und das Filtrat bei 100 °C/200 mbar eingedampft. Der Rückstand wurde in 75 ml Wasser aufgerührt und mit 2n-NaOH bis zur alkalischen Reaktion versetzt. Es wurde filtriert, mit Wasser gewaschen und bei 100 °C/20 mbar getrocknet.
Ausbeute : 12,0 g (95 % d. Th.), Fp. : 113-114 °C

Beispiel 3

13,41 g (50 mMol) Bis-(4-fluorphenyl)-methyl-phosphansulfid wurden in 50 ml Eisessig gelöst und bei 60 °C innerhalb 15 Minuten 1,70 g (50 mMol) Wasserstoffperoxid (4,3 ml einer 35 %igen wässrigen Lösung) zugetropft. Nach 30 Minuten bei 60 °C wurde auf 20 °C gekühlt, Schwefel abfiltriert, das Filtrat eingedampft und der Rückstand am Kugelrohr bei 0,1 mbar destilliert.
Ausbeute : 12,2 g (97 % d. Th.), Fp. : 113-114 °C

Beispiel 4

Die Arbeitsweise war wie in Beispiel 2.
Aus 13,02 g (50 mMol) Bis-(4-methylphenyl)-methyl-phosphansulfid und 1,70 g (50 mMol) Wasserstoffperoxid (4,3 ml einer 35 %igen Lösung wurden 11,7 g (96 % d.Th.) Bis-(4-methylphenyl)-methyl-phosphanoxid erhalten.
Fp. : 146 °C

Beispiel 5

Die Arbeitsweise war wie in Beispiel 2.
Aus 16,52 g (50 mMol) Bis-(4-fluorphenyl)-phenyl-phosphansulfid und 1,70 g (50 mMol) Wasserstoffperoxid (4,3 ml einer 35 %igen wässrigen Lösung) wurden 15,2 g (97 % d. Th.) Bis-(4-fluorphenyl)-phenyl-phosphanoxid erhalten.
Fp. : 126 °C

Beispiel 6

Dis Arbeitsweise war wie in Beispiel 2.
Aus 14,72 g (50 mMol) Triphenylphosphansulfid und 1,70 g (50 mMol) Wasserstoffperoxid (4,3 ml einer 35 %igen Lösung) wurden 13,5 g (97 % d. Th.) Triphenylphosphanoxid erhalten.
Fp. : 154 °C

Beispiel 7

18,16 g (50 mMol) Bis-(4-chlorphenyl)-phenyl-phosphansulfid wurden in 50 ml Propionsäure bei 50 °C gelöst und 1,79 g (52,5 mMol) Wasserstoffperoxid (4,51 ml einer 11,63 molaren wässrigen Lösung) unter Eiskühlung bei 50 °C zugetropft. Nach 30 Minuten bei 50 °C wurde auf 20 °C abgekühlt, filtriert und das Lösemittel bei 100 °C/20 mbar abdestilliert. Der Rückstand wurde in Wasser suspendiert, mit 2n-NaOH bis zur alkalischen Reaktion versetzt, Bis-(4-chlorphenyl)-phenyl-phosphanoxid abfiltriert, Bis-(4-chlorphenyl)-phenyl-phosphanoxid abfiltriert, mit Wasser nachgewaschen und bei 100 °C/20 mbar getrocknet.

Ausbeute : 16,4 g (94 % d. Th.), Fp. : 107 °C

### Beispiel 8

7,26 g (20 mMol) Bis-(4-chlorphenyl)-phenyl-phosphansulfid wurden bei 50 °C in 25 ml Acetanhydrid suspendiert und 0,72 g (21,2 mMol) (1,81 ml einer 35 %igen Lösung) Wasserstoffperoxid unter Kühlung zugetropft. Nach 30 Min. bei 50 °C wurde auf Raumtemperatur abgekühlt, filtriert, einrotiert und der Rückstand mit 25 ml Wasser aufgerührt. Es wurde 2n-NaOH bis zur alkalischen Reaktion zugegeben, abfiltriert und destilliert.

Ausbeute : 6,2 g (89 % d. Th.)

### Beispiel 9

7,26 g (20 mMol) Bis-(4-chlorphenyl)-phenyl-phosphansulfid, gelöst in 12,5 ml Eisessig/12,5 ml Toluol und 0,72 g (21,1 mMol) (1,81 ml einer 35 %igen Lösung) Wasserstoffperoxid ergaben nach einer Reaktionsdauer von 60 Min. bei 50 °C und Aufarbeitung wie in Beispiel 8 6,4 g (92 % d. Th.) Bis-(4-chlorphenyl)-phenyl-phosphanoxid.

B) Vergleichsbeispiele

Es wurden jeweils 20 mMol des entsprechenden Phosphansulfids in 20 ml der nachstehend angegebenen Lösungsmittel (a, b = erfindungsgemäß, c, d, e = Vergleich) gelöst oder suspendiert und bei 50 °C 0,79 g (23,2 mMol Wasserstoffperoxid = 2 ml einer 35 %igen Lösung) zugegeben. Im Falle der Carbonsäuren als Lösungsmittel (erfindungsgemäß) trat spontane Reaktion unter Temperaturhöhung ein. Bei den übrigen aufgeführten Lösungsmitteln (Vergleich) wurde keine exotherme Reaktion beobachtet.

Nach jeweils 30 Minuten bei 50 °C (bei längeren Reaktionszeiten nach jeweils 1-2 Studen) wurde eine Probe entnommen und dünnschichtchromatographisch auf das Vorhandensein von restlichem Phosphansulfid geprüft. Die Tabelle gibt die Zeiten an, die notwendig waren, bis kein Phosphansulfid mehr nachweisbar war :

| Phosphansulfid / Lösungsmittel | 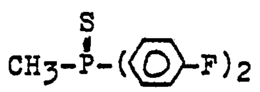 | 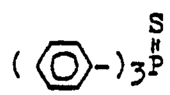 | 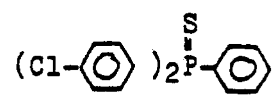 |
|---|---|---|---|
| a) Eisessig | 30 Min. | 30 Min. | 30 Min. |
| b) Propionsäure | 1 h | 1 h | 1 h |
| c) Methanol | 16 h | 16 h | 12 h |
| d) Acetonitril | 12 h | 8 h | 16 h |
| e) Aceton | 8Tage+ | 8 Tage + | 8 Tage + |

+ bei 30 °C (unvollständige Umsetzung)

## Patentansprüche

1. Verfahren zur Herstellung tertiärer Phosphanoxide durch eine oxidative Behandlung von tertiären Phosphansulfiden mit Wasserstoffperoxid in einem Lösungsmittel, dadurch gekennzeichnet, daß man ein Lösungsmittel verwendet, welches zu mindestens etwa 20 Gew.-%, vorzugsweise zu mindestens 50 Gew.-%, aus — gegebenenfalls. halogenierten — aliphatischen $C_1$-$C_6$-Carbonsäuren und/oder deren Anhydriden, und zum Rest aus damit mischbaren anderen inerten Lösungsmitteln besteht.

2. Verfahren nach Anspruch 1, dadurch gekennzeichnet, daß das Lösungsmittel ausschließlich aus — gegebenenfalls halogenierten — aliphatischen $C_1$-$C_6$-Carbonsäuren und/oder deren Anhydriben, insbesondere nur aus Essigsäure, besteht.

3. Verfahren nach den Ansprüchen 1 oder 2, dadurch gekennzeichnet, daß man als tertiäre Phosphansulfide Verbindungen der Formel

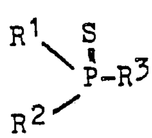

worin $R^1$, $R^2$ und $R^3$ = unabhängig voneinander gegebenenfalls durch inerte Gruppen substituierte $C_1$-$C_{12}$-Alkyl- $C_6$-$C_{10}$-Aryl- $C_6$-$C_{20}$-Aralkyl- gruppen verwendet.

4. Verfahren nach einem oder mehreren der Ansprüche 1 bis 3, dadurch gekennzeichnet, daß man das Wasserstoffperoxid in etwa äquimolarer Menge, bezogen auf das Ausgangs-Phosphansulfid, einsetzt.

5. Verfahren nach einem oder mehreren der Ansprüche 1 bis 4, dadurch gekennzeichnet, daß man die oxidative Behandlung bei Temperaturen zwischen etwa —5 und +100 °C, vorzugsweise zwischen +40 und +80 °C, durchführt.

## Claims

1. A process for the preparation of tertiary phosphine oxides by means of an oxidative treatment of tertiary phosphine sulfides with hydrogen peroxide in a solvent, which comprises using a solvent which is composed of at least about 20 % by weight, preferably at least 50 % by weight, of optionally halogenated, aliphatic $C_1$-$C_6$-carboxylic acids and/or their anhydrides, the remainder being composed of other inert solvents miscible therewith.

2. The process as claimed in claim 1, wherein the solvent is composed exclusively of optionally halogenated, aliphatic $C_1$-$C_6$-carboxylic acids and/or their anhydrides, especially acetic acid only.

3. The process as claimed in claims 1 or 2, wherein the tertiary phosphine sulfides used are compounds of the formula

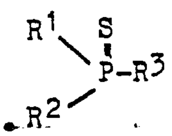

wherein $R^1$, $R^2$ und $R^3$ = independently of one another, $C_1$-$C_{12}$-alkyl, $C_6$-$C_{10}$-aryl and $C_6$-$C_{20}$-aralkyl groups optionally substituted by inert groups.

4. The process as claimed in one or more of claims 1 to 3, wherein the hydrogen peroxide is used in approximately an equi-molar quantity based on the starting phosphine sulfide.

5. The process as claimed in one or more of claims 1 to 4, wherein the oxidative treatment is carried out at temperatures of between about —5 and +100 °C, preferably of between +40 and +80 °C.

## Revendications

1. Procédé pour préparer des oxydes de phosphines tertiaires par un traitement oxydant de sulfures de phosphines tertiaires au moyen de peroxyde d'hydrogène dans un solvant, procédé caractérisé en ce qu'on utilise un solvant qui est constitué, pour au moins environ 20 % en poids, de préférence pour au moins 50 % en poids, d'acides carboxyliques aliphatiques en $C_1$-$C_6$, éventuellement halogénés, et/ou de leurs anhydrides, et, pour le reste, d'autres solvants inertes miscibles avec les précédents.

2. Procédé selon la revendication 1 caractérisé en ce que le solvant est constitué exclusivement d'acides carboxyliques aliphatiques en $C_1$-$C_6$, éventuellement halogénés, et/ou d'anhydrides de tels acides, plus particulièrement exclusivement d'acide acétique.

3. Procédé selon l'une des revendications 1 et 2, caractérisé en ce qu'on utilise, comme sulfures de phosphines tertiaires, des composés répondant à la formule :

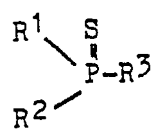

dans laquelle $R^1$, $R^2$ et $R^3$ représentent chacun, indépendamment les uns des autres, un radical alkyle en $C_1$-$C_{12}$, aryle en $C_6$-$C_{10}$ ou aralkyle en $C_6$-$C_{20}$, éventuellement porteurs de substituants inertes.

4. Procédé selon l'une quelconque des revendications 1 à 3, caractérisé en ce qu'on utilise le peroxyde d'hydrogène en une quantité à peu près équimolaire par rapport au sulfure de phosphine de départ.

5. Procédé selon l'une quelconque des revendications 1 à 4, caractérisé en ce qu'on effectue le traitement oxydant à des températures comprises entre environ —5 et +100 °C, de préférence entre +40 et +80 °C.